(19) Europäisches Patentamt
European Patent Office
Office européen des brevets

(11) Veröffentlichungsnummer: **0 524 409 A1**

(12) # EUROPÄISCHE PATENTANMELDUNG

(21) Anmeldenummer: **92109604.6**

(22) Anmeldetag: **06.06.92**

(51) Int. Cl.5: **C08G 73/12**, C08F 222/40, C08J 5/04

(30) Priorität: **24.06.91 US 719440**

(43) Veröffentlichungstag der Anmeldung: **27.01.93 Patentblatt 93/04**

(84) Benannte Vertragsstaaten: **CH DE ES FR GB IT LI**

(71) Anmelder: **BASF Aktiengesellschaft**
**Carl-Bosch-Strasse 38**
**W-6700 Ludwigshafen(DE)**

(72) Erfinder: **Reck, Bernd, Dr.**
**Brückelweg 30**
**W-6718 Grünstadt(DE)**
Erfinder: **Laschober, Rita Agnes, Dr.**
**Westendstrasse 12**
**W-6700 Ludwigshafen(DE)**
Erfinder: **Gerth, Dale, Dr.**
**Moenchsgasse 3**
**W-6720 Speyer(DE)**
Erfinder: **Boyd, Jack Douglas, Dr.**
**2407 Camino Bucanero**
**San Clemente, Ca. 92672(US)**

(54) **Hitzehärtbare Bismaleinimid-Formmassen.**

(57) Die Erfindung betrifft hitzehärtbare Bismaleinimid-Harze die ein Bismaleinimid, eine aromatische Dialkenyl-Verbindung als Comonomer, sowie 1 bis 40 Gew.% einer Monoalkenylverbindung, vorzugsweise 2-Hydroxy-3-allylbiphenyl als reaktiven Verdünner enthalten.

EP 0 524 409 A1

Die Erfindung betrifft hitzehärtbare Harze auf Basis von Bismaleinimiden.

Bismaleinimidharze, die aromatische Diamine als Comonomere enthalten, weisen zwar nach dem Aushärten selbst bei Temperaturen über 200 °C hervorragende mechanische und elektrische Eigenschaften auf, die entsprechenden präpolymeren Harze haben jedoch relativ hohe Erweichungstemperaturen, verbunden mit hohen Schmelzviskositäten; Halbzeuge bzw. Prepregs, hergestellt aus diesen präpolymeren Harzen, besitzen nicht die vom Verarbeiter oft gewünschte Klebrigkeit ("tack").

Niedrigere Erweichungstemperaturen und Viskositäten der präpolymeren Harze werden durch den Einsatz von zweikernigen Alkenylphenolen erreicht, wie z.B. in DE-A 26 27 045 (US 4,100,140), EP-A 14 816 (US 4,288,583) und DE-B 28 18 091 (US 4,173,592) beschrieben ist. In letzterer wird auch erwähnt, daß zur Verminderung der Viskosität der Formmasse und um den gehärteten Harzen Biegsamkeit zu verleihen, Vinyl- und Allyl-Verbindungen zugemischt werden können.

Nachteilig an den bekannten Mischungen, auch mit dem bevorzugten Diallylbisphenol A, ist ihre verhältnismäßig geringe Klebrigkeit, die zur Verarbeitung von Prepregs für Hochleistungsverbundwerkstoffe unzureichend ist. Außerdem ist die Verarbeitungsviskosität der Harze für viele Anwendungszwecke nicht ausreichend. Versucht man, wie in DE-A 28 18 091 empfohlen, die Viskosität durch bestimmte Monomere, wie z.B. Styrol, Allylphenol oder Allyloxybenzol zu erniedrigen, so ergeben sich Probleme bei der Verarbeitung infolge der hohen Flüchtigkeit dieser teilweise gesundheitsschädlichen Substanzen. Der Zusatz anderer Monomerer, wie Diallylphthalat beeinträchtigt die mechanischen bzw. thermischen Eigenschaften von ausgehärteten Formkörpern.

Der Erfindung lag also die Aufgabe zugrunde, Formmassen aus Bismaleinimiden und Dialkenyl-Comonomeren so zu modifizieren, daß ihr "tack" verbessert und ihre Viskosität erniedrigt wird, ohne daß dabei flüchtige Substanzen zugesetzt werden müssen und die Eigenschaften daraus hergestellter Formkörper beeinträchtigt werden.

Es wurde gefunden, daß diese Aufgaben gelöst werden, wenn man den genannten Formmassen 1 bis 40, insbesondere 5 bis 25 Gew.%, bezogen auf die gesamte Formmasse, einer Monoalkenyl-Verbindung der allgemeinen Formel

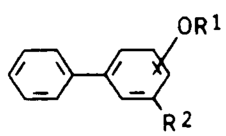

(I)

zusetzt.

In dieser Formel ist

a) entweder $R^1$ = Allyl oder Propenyl und $R^2$ = H,

b) oder es ist $R^1$ = H und $R^2$ = Allyl oder Propenyl, wobei dann die OH-Gruppe in ortho-Stellung zu $R^2$ steht.

Diese Substanzen zeichnen sich dadurch aus, daß sie einerseits niedrige Schmelzpunkte haben und dadurch die Viskosität des Bismaleinimid-Harzes herabsetzen und andererseits verhältnismäßig hohe Siedepunkte aufweisen, so daß sie bei Verarbeitungstemperaturen eine geringe Flüchtigkeit aufweisen.

Die Bismaleinimidharze enthalten ein Bismaleinimid A der allgemeinen Formel

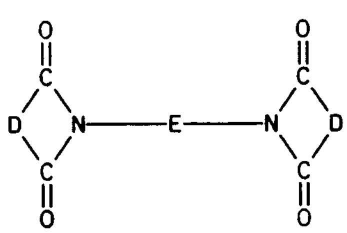

(II),

in der D eine gegebenenfalls substituierte Kohlenstoffdoppelbindung ist und E einen zweiwertigen Rest mit zumindest zwei Kohlenstoffatomen bedeutet. Bismaleinimide sind z.B. aus DE-A-2 040 094, DE-A-2 719 903 und DE-A-3 247 058 bekannt. Neben Bismaleinimiden sind grundsätzlich auch Polymaleinimide sowie Mischungen verschiedener Bismaleinimide geeignet. Bevorzugte Bismaleinimide sind 4,4'-Bismaleinimidodiphenylmethan, 4,4'-Bismaleinimidodiphenylether, 3,3'-Bismaleinimidodiphenylsulfon, 1,3-Bismaleinimidobenzol, 2,4-Bismaleinimidotoluol, 1,6-Bismaleinimidohexan und 2,2,4-Trimethyl-1,6-bismaleinimidohexan. Die Bismaleinimidharze enthalten vorzugsweise 40 bis 80 Gew.%, bezogen auf A + B + C, des Bismaleinimids A.

Dialkenylverbindungen B sind zweikernige aromatische Verbindungen mit zwei Alkenylsubstituenten mit 2 bis 6 C-Atomen, wobei die Alkenylgruppe direkt oder über ein Sauerstoffatom an den Benzolring gebunden ist. Bevorzugt sind Allyl- und Propenylverbindungen, insbesondere solche, die sowohl eine OH-Gruppe wie auch eine Alkenylgruppe am gleichen Benzolring besitzen. Hierzu zählen Allylphenole, z.B. o,o-Diallylbisphenol A; ebenfalls geeignete Allylphenole basieren z.B. auf Bisphenol F oder entsprechenden Novolaken, Bisphenol S, Hydrochinon oder Dicyclopentadien nach EP-A-276 733. Andere geeignete Alkenylverbindungen sind z.B. 2,6-Di(2-propenylphenoxy)pyridin, 4,4'-Di(2-propenylphenoxy)benzophenon, 4,4'-Bis(2-propenylphenoxy)diphenylsulfon sowie andere Oligomere nach EP-A-230 741. Die Bismaleinimidharze enthalten vorzugsweise 20 bis 60 Gew.%, bezogen auf A + B + C, der Dialkenylverbindung B.

Die erfindungsgemäß zugesetzten Monoalkenyl-Verbindungen C sind an sich bekannt; sie sind beispielsweise in Agr.Biol.Chem. (Tokyo) 32, 1162 (1968) als Substanzen mit fungistatischer Wirkung beschrieben.

Bei der Herstellung der Verbindungen geht man aus von 2- bzw. 4-Hydroxybiphenyl, welches mit Allylchlorid zum entsprechenden Allylether umgesetzt wird ($R^1$ = Allyl und $R^2$ = H in der allgemeinen Formel). Aus diesem Allylether kann durch Claissen-Umlagerung das 2- bzw. 4-Hydroxy-3-allylbiphenyl ($R^1$ = H und $R^2$ = Allyl) hergestellt werden. Letztere sind bevorzugt, weil hier die Löslichkeit der Bismaleinimide am besten ist. Besonders gut geeignet ist das 2-Hydroxy-3-allylbiphenyl, weil dieses bei Raumtemperatur flüssig und niederviskos ist. Die entsprechenden Propenylverbindungen können aus den Allylverbindungen durch thermische, basisch katalysierte Umlagerung hergestellt werden. Die Monoalkenylverbindungen C können bei der Herstellung bzw. der Härtung der erfindungsgemäßen Bismaleinimid-Harze copolymerisieren; sie wirken also als reaktiver Verdünner im System. Sie sind in den erfindungsgemäßen Harzen in Mengen von 1 bis 40, vorzugsweise von 2 bis 20 Gew.%, bezogen auf A + B + C, enthalten.

Zur Herstellung der erfindungsgemäßen Bismaleinimidharze werden die Ausgangsmaterialien unter Anwendung der üblichen Techniken vermischt und auf Temperaturen zwischen 70 bis 190 °C erhitzt, wobei die Bildung eines Präpolymeren erfolgt. Je nach Fortschritt der Vorpolymerisation erhält man eine relativ niedrigviskose Schmelze oder einen glasartig erstarrten Feststoff, der je nach Verwendungszweck gemahlen oder in einem Lösungsmittel gelöst wird. Die Herstellung der Harze kann auch in einem Lösungsmittel erfolgen.

Je nach beabsichtigtem Verwendungszweck kann es vorteilhaft sein, den erfindungsgemäßen Harzen weitere Komponenten beizufügen. In Frage kommende Zusatzkomponenten sind beispielsweise Amine, bevorzugt aromatische Diamine (z.B. 4,4'-Diaminodiphenylmethan) und Aminophenole, die ebenfalls eine Additionsreaktion mit den Maleinimiddoppelbindungen eingehen können. Es können auch Präpolymere, z.B. aus einem Bisimid und einem Amin eingesetzt werden.

Für bestimmte Anwendungen kann es angebracht sein, in geringen Mengen geeignete Vinylmonomere, z.B. Styrol, $\alpha$-Methylstyrol, Divinylbenzol, Acryl- oder Methacrylsäureester, Diallylphthalat, 3,3'-Diallylbisphenol A, Triallylisocyanurat, Triallylcyanurat oder Vinylpyrrolidon einzusetzen. Ihr Anteil soll aber weniger als 10, vorzugsweise weniger als 2 Gew.%, bezogen auf die Mischung, betragen.

Die erfindungsgemäßen Mischungen können als weitere Zusätze Inhibitoren enthalten. Geeignete Inhibitoren sind Hydrochinon, Benzochinon oder Phenothiazin. Die Menge an eingesetzten Inhibitoren soll etwa zwischen 0,05 bis 1,5 Gew.% liegen.

Die erfindungsgemäßen Mischungen können weitere Zusätze, die in der Technologie der härtbaren Kunststoffe üblich sind, enthalten, wie Füllstoffe, Weichmacher, Pigmente, Farbstoffe, Formtrennmittel, flammhemmende Stoffe. Als Füllstoffe können auch Glas- und Kohlenstoffasern, Graphitpulver, Glimmer, Quarzpulver, Koalin oder Metallpulver bis zu einem Anteil von 80 Gew.%, bezogen auf die Mischung, verwendet werden.

Die erfindungsgemäßen Mischungen sind als Imprägnier-, Gieß- und Laminierharze oder als Formmassen (gefüllt oder ungefüllt) einsetzbar.

Dienen sie zur Herstellung von Hochleistungsverbundwerkstoffen, so kann die Tränkung von Glas-, Kohlenstoff- oder Aramidfasern unter Bildung von unidirektionalen oder Gewebeprepregs entweder aus der Schmelze bei 50 bis 150 °C oder aus Lösung erfolgen. Geeignete Lösungsmittel sind halogenierte Kohlenwasserstoffe, wie z.B. Dichlormethan, Ketone wie z.B. Aceton oder Methylethylketon, Glykolester, Toluol, Dimethylformamid, N-Methylpyrrolidon bzw. Gemische aus mehreren Lösungsmitteln. Mehrere Lagen solcher Prepregs werden dann übereinanderdrapiert und miteinander verpreßt. Dabei ist der gute "tack" der erfindungsgemäßen Bismaleinimid-Harze von Vorteil.

Bei dem sogenannten "reaction transfer molding"-Verfahren werden in eine zweiteilige Form vorgeformte Fasergebilde eingelegt, dann wird die Form geschlossen und die Harzschmelze wird in die Form injiziert

und dort ausgehärtet. Dabei ist die niedrige Viskosität der erfindungsgemäßen Bismaleinimid-Harze von großem Vorteil.

Die in den Beispielen genannten Teile und Prozente beziehen sich auf das Gewicht.

Beispiel

a) Herstellung von 2-Hydroxy-3-allylbiphenyl

Zu einer Lösung von 1275 g 2-Hydroxybiphenyl in 4000 ml Aceton wurden 454 g KOH als 50 %ige wäßrige Lösung zugegeben und 4 h bei 60 ° C gerührt. 795 ml Allylchlorid wurden zugetropft. Nach 12 h Rühren bei 60 ° C wurden weitere 162 ml Allylchlorid zugetropft und nochmals 12 h bei 60 ° C gerührt. Das Lösungsmittel Aceton wurde abdestilliert, 2000 ml Wasser zugegeben und das Reaktionsprodukt mit 2000 ml Methylethylketon extrahiert. Die organische Phase wurde zweimal mit jeweils 2000 ml Wasser gewaschen und das Lösungsmittel im Vakuum entfernt.

Ausbeute an 2-Allyloxybiphenyl: 1540 g
Reinheit: 95 %
Viskosität bei 25 ° C: 17 mPas (Rheomat-Viskosimeter)
phenolisches OH: 0,02 %

Zur Durchführung der Claissen-Umlagerung wurden 500 g 2-Allyloxybiphenyl in einen Glaskolben Vakuum (600 mbar) für 7 h auf 195 ° C erhitzt.

Ausbeute an 2-Hydroxy-3-allylbiphenyl: 497 g
Reinheit: 86 % (HPCL)
Viskosität bei 25 ° C: 21 mPas (Rheomat-Viskosimeter)
Hydrierjodzahl: 118
phenolisches OH: 7,8 %

$b_1$) Herstellung und Härtung eines Bismaleinimid-Harzes

In einem Rührgefäß wurden 600 g 0,0'-Diallylbisphenol A, 600 g 4,4'-Bismaleinimidodiphenylmethan, 600 g 2,4-Bismaleinimidotoluol und 200 g 2-Hydroxy-3-allyl-biphenyl bei 140 ° C gemischt, bis sich eine homogene Schmelze gebildet hat.

Zur Bestimmung der mechanischen und thermischen Eigenschaften des unverstärkten Formstoffs wurde ein Teil des Harzes zwischen Metallformen gegossen und 2 h bei 160 ° C, 4 h bei 180 ° C und 6 h bei 240 ° C gehärtet. Daraus hergestellte Prüfkörper ergaben die in der Tabelle angegebenen Werte.

$b_2$) Zum Vergleich wurde nach der gleichen Methode ein Harz hergestellt, das kein Hydroxyallylbiphenyl, dafür aber 40 statt 30 Teile Diallylbisphenol A enthielt.

Tabelle

| ungehärtetes Reinharz: | | $b_1$ | $b_2$ |
|---|---|---|---|
| Viskosität bei 75°C (Kegel-Platte-Viskosimeter) | [mPas] | 2100 | >4000 |
| **gehärtetes Reinharz:** | | $b_1$ | $b_2$ |
| $K_{IC}$-Wert (ASTM E399) | [$MPam^{1/2}$] | 0,90 | 0,84 |
| $G_{IC}$-Wert (ASTM E399) | [$J/m^2$] | 170 | 143 |
| Erweichungstemperatur $T_S$ trocken (Tangentenschnittpunkt aus DMA-Messung) | [°C] | 273 | 276 |
| E-Modul (DIN 53457) | [MPa] | 4490 | 4480 |

Das erfindungsgemäße Harz hat bei 100 ° C eine wesentlich geringere Viskosität als das Vergleichsharz; die Glastemperatur von 8 ° C deutet auf einen bei Raumtemperatur ausreichend guten Tack hin. Die durch Härtung hergestellten Formkörper unterscheiden sich in ihren mechanischen bzw. thermischen Eigenschaften praktisch nicht.

c) Herstellung von Verbundwerkstoffen

Zur Herstellung von unidirektionalen Prepregs mit der Kohlenstofffaser IM7 (Fa. Hercules) wurde das Bismaleinimidharz bei 70 ° C zunächst auf ein kontinuierlich fortlaufendes Prepregpapier unter Bildung eines dünnen Films (ca. 70 g/$m^2$) aufgebracht. Anschließend wurde das Faserband mit einem Flächengewicht von 134 g/$m^2$ unter Druck bei ca. 85 ° C in den Harzfilm eingelegt und vollständig getränkt.

Zur Herstellung von verstärkten Hochleistungsverbundwerkstoffen wurden durch Übereinanderschichtung mehrere Prepreglagen (entsprechend der Anforderung durch die Prüfkörpernorm) Laminate hergestellt und nach dem oben angegebenen Härtungszyklus gehärtet.

| | | |
|---|---|---|
| Laminateigenschaften (Harzgehalt 34 %) | | |
| $G_{IC}$-Wert (nach NASA RP 1092) | | 272 J/$m^2$ |
| $G_{IIC}$-Wert (nach NASA RP 1092) | | 533 J/$m^2$ |
| Biegefestigkeit | 23 ° C trocken | 2970 MPa |
| (DIN 29971) | 180 ° C trocken<br>180 ° C feucht | 2150 MPa<br>1660 MPa |
| | (10 d/70 ° $H_2O$) | |

**Patentansprüche**

**1.** Hitzehärtbare Bismaleinimid-Harze, enthaltend

A. ein Bismaleinimid,

B. eine aromatische Dialkenyl-Verbindung,

C. 1 bis 40 Gew.%, bezogen auf A + B + C, einer Monoalkenyl-Verbindung,

dadurch gekennzeichnet, daß die Monoalkenyl-Verbindung C die allgemeine Formel

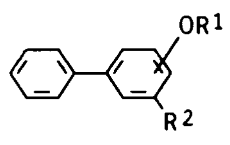

(I)

aufweist, wobei

a) entweder $R^1$ = Allyl oder Propenyl und $R^2$ = H ist,

b) oder $R^1$ = H, $R^2$ = Allyl oder Propenyl ist und die OH-Gruppe in ortho-Stellung zu $R^2$ steht.

**2.** Verwendung der Bismaleinimid-Harze nach Anspruch 1 zur Herstellung von Hochleistungsverbundwerkstoffen.

Europäisches Patentamt

# EUROPÄISCHER RECHERCHENBERICHT

Nummer der Anmeldung

EP 92 10 9604

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 014 816 (CIBA-GEIGY)<br>--- | | C 08 G 73/12<br>C 08 F 222/40<br>C 08 J 5/04 |
| A | FR-A-2 316 267 (CIBA-GEIGY)<br>& DE-A-2 627 045 (CIBA-GEIGY) (Kat. D)<br>--- | | |
| A | EP-A-0 321 155 (AMOCO)<br>--- | | |
| D,A | EP-A-0 230 741 (TECHNOCHEMIE)<br>--- | | |
| A | EP-A-0 392 979 (CIBA-GEIGY)<br>----- | | |
| | | | **RECHERCHIERTE SACHGEBIETE (Int. Cl.5)** |
| | | | C 08 G<br>C 08 F |

Der vorliegende Recherchenbericht wurde für alle Patentansprüche erstellt

| Recherchenort | Abschlußdatum der Recherche | Prüfer |
|---|---|---|
| DEN HAAG | 12-10-1992 | LEROY ALAIN |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)